# EUROPÄISCHE PATENTSCHRIFT

(11) **EP 0 849 476 B1**
(45) Veröffentlichungstag und Bekanntmachung des Hinweises auf die Patenterteilung: **05.01.2000**
(21) Anmeldenummer: 97116681.4
(22) Anmeldetag: 25.09.1997
(51) Int. Cl.: F16B 19/08, B21D 53/00

(54) **Hohlniet zur Befestigung an einem Metallbehälter durch Buckelschweissen sowie Verfahren zur Herstellung desselben**
Hollow rivet fixable to a metal container by projection welding and method of making such rivet
Rivet creux fixable sur un récipient métallique par soudage par projection et méthode pour fabriquer un tel rivet

(30) Priorität: 21.11.1996 DE 19648198
(43) Veröffentlichungstag der Anmeldung: 24.06.1998
(73) Patentinhaber: Neue Maschinenfabrik GmbH, 38120 Braunschweig (DE)
(72) Erfinder: Meyer, Wolfgang, 38112 Braunschweig (DE); Werner, Hans-Joachim, 38446 Wolfsburg (DE)
(74) Vertreter: Leine, Sigurd, Dipl.-Ing.

(56) Entgegenhaltungen:
- EP-A- 0 502 688
- EP-A- 0 588 532

## Beschreibung

Die Erfindung betrifft einen Hohlniet der im Oberbegriff des Anspruchs 1 genannten Art zur Befestigung an einem Metallbehälter durch Buckelschweißen. Die Erfindung betrifft außerdem ein Verfahren zur Herstellung eines solchen Hohlniets.

Durch EP-B-0 502 688 ist ein Hohlniet der betreffenden Art bekannt, der einen als Ringflansch ausgebildeten Kopfteil und einen Schaftteil aufweist, der eine Mehrzahl scharfer Spitzen bildet. Die Spitzen sind durch das Einschneiden zweier Scherenschnitte im rechten Winkel zueinander geformt. Auf diese Weise ergeben sich um den Umfang des Hohlniets vier gleich beabstandete, dreieckförmige Beine, von denen jedes eine scharfe Spitze hat. Die Beine grenzen in Umfangsrichtung des Schaftes unmittelbar aneinander. Beim Buckelschweißen wird ein derartiger Hohlniet mit den scharfen Spitzen gegen ein Blech, z. B. die Blechwandung eines Behälters, gedrückt und ein elektrischer Strom an den Hohlniet einerseits und die Blechwandung andererseits angelegt, so daß im Kontaktbereich der Spitzen aufgrund des dortigen hohen Widerstandes Wärme erzeugt und so die Spitzen der Beine mit der gegenüberliegenden Blechwandung verschweißt werden. Ein Nachteil dieses bekannten Hohlniets besteht darin, daß der Querschnitt der Beine, der für die Größe des elektrischen Widerstandes und damit für die Wärmeerzeugung zum Zwecke des Verschweißens maßgebend ist, von der Spitze an stark zunimmt und dadurch die Schweißwirkung abnimmt. Da nach Verschweißen allein der Spitzen bereits ausreichende Festigkeit der Verschweißung hergestellt ist, wird der Strom und damit der Schweißvorgang unterbrochen bzw. abgebrochen. Dies hat zur Folge, daß die Beine durch den Schweißvorgang nicht verschwinden und im befestigten Zustand sich weiterhin in Verlängerung des Schaftteils erstrecken. Der Schaftteil grenzt daher in nachteiliger Weise nicht unmittelbar an die Blechwand an. Dies ist von besonderem Nachteil dann, wenn ein so befestigter Hohlniet als Lagerzapfen für einen Henkel aus Kunststoff an einem Behälter verwendet wird, weil sich der Rand des Loches am Ende des Henkels bei Belastung in die Zwischenräume zwischen den Beinen eindrückt und sich dann bei Bewegung an den scharfen Seitenkanten der Beine abschabt, so daß sich die Löcher vergrößern und damit die Gefahr eines Lösens des Bügels von dem Lagerzapfen besteht. Dies kann zu beträchtlichen Schäden führen, wenn es sich z. B. um Behälter mit Flüssigkeiten, z. B. Farbe handelt, die bei offenem Behälter oder Platzen des Behälters bei Sturz sich in die Umgebung ergießt.

Der Erfindung liegt die Aufgabe zugrunde, einen Hohlniet der im Oberbegriff des Anspruchs 1 genannten Art zur Befestigung an einem Metallbehälter durch Buckelschweißen zu schaffen, der die genannten Nachteile nicht aufweist, bei dem also die Gefahr des Verbleibens von Hohlräumen zwischen den Beinen nach dem Schweißen verringert ist. Die Erfindung betrifft außerdem ein Verfahren zur Herstellung eines derartigen Hohlniets.

Die der Erfindung zugrundeliegende Aufgabe wird bei einem Hohlniet durch die im Anspruch 1 angegebene Lehre gelöst. Die ein Verfahren zur Herstellung eines solchen Hohlniets betreffende Aufgabe wird durch die im Anspruch 4 angegebene Lehre gelöst.

Der Grundgedanke der Erfindung besteht darin, die Vorsprünge in Umfangsrichtung im Abstand zueinander anzuordnen, derart, daß zwischen den Vorsprüngen in Umfangsrichtung verlaufende Ränder des Schaftes gebildet sind. Im Ergebnis haben somit die Vorsprünge in Umfangsrichtung eine verringerte Ausdehnung, so daß der beim Buckelschweißen maßgebliche elektrische Widerstand verringert ist und nach Belieben des Fachmannes so angepaßt werden kann, daß sich die Erhitzung beim Buckelschweißen bis zum Fuß der Vorsprünge ergibt und die Vorsprünge damit praktisch vollständig zum Verschwinden gebracht werden. Der Schaft stößt daher praktisch ohne Freiraum unmittelbar an die Blechwandung, an die der Hohlniet angeschweißt ist, an. Es sind insbesondere keine Zwischenräume gebildet, die zum Abschaben von Rändern der Befestigungslöchern von Henkeln aus Kunststoff führen können.

Da sich die Vorsprünge in ihren Fußbereichen nicht über den gesamten Umfang des Schaftes erstrecken, ihre Ausdehnung in Umfangsrichtung also gering ist, sieht ein weiterbildendes Merkmal der Erfindung vor, daß die Länge der Vorsprünge in Achsrichtung des Schaftes kleiner ist als der Radius des Schaftes. Dadurch wird eine schlanke Form der Vorsprünge vermieden, die für das Buckelschweißen ungünstig ist.

Gemäß einer Weiterbildung der Erfindung ist die Zahl der Vorsprünge drei. Der besondere Vorteil dieser Ausführungsform besteht darin, daß beim Buckelschweißen grundsätzlich alle drei Vorsprünge gleichzeitig und auch mit gleicher Kraft zur Anlage kommen. Dadurch ergibt sich eine gleichmäßige Verschweißung für alle Vorsprünge. In jedem Falle ist es dabei zweckmäßig, daß sie dreieckförmig sind. Aufgrund ihrer Spitze können sie in bekannter Weise Lackschichten, beispielsweise auf der Außenseite eines Behälters durchdringen und so den für die Buckelschweißung notwendigen elektrischen Kontakt sicherstellen. Andererseits nimmt der Querschnitt der Vorsprünge von der Spitze her zu den Füßen hin zu, so daß ausreichend Material für die Herstellung der Schweißverbindung zur Verfügung steht.

Das erfindungsgemäße Verfahren ist im Anspruch 4 gekennzeichnet. Das Wesentliche dieses Verfahrens besteht darin, daß nicht wie beim geschilderten Stand der Technik zunächst Schnitte zur Herstellung der Vorsprünge erzeugt werden, sondern daß vielmehr zunächst die nötige Verformung zur Herstellung des Schaftes durchgeführt wird. Diese Verformung besteht in der Herstellung einer im wesentlichen U-förmigen Vertiefung, deren Seitenwand im wesentlichen der Größe des Schaftes des herzustellenden Hohlniets entspricht. Danach wird aus dem Boden der Vertiefung ein sternförmiges Teil ausgestanzt, das so geformt ist, daß von dem Boden spitze, sich von der Seitenwand radial nach innen erstreckende Vorsprünge verbleiben, die dann später in Achsrichtung gebogen werden. Erst danach erfolgt ein Kreisschnitt, mit dem der Flanschteil des Hohlniets ausgebildet und der Hohlniet aus dem Blech herausgeschnitten wird. Durch die Formgebung des aus dem Boden ausgestanzten sternförmigen Teils läßt sich die Form, Größe und Lage der Vorsprünge genau bestimmen und so bemessen, wie das für das Buckelschweißen am günstigsten ist. Diese Bestimmung ist völlig unabhängig von der Ausbildung des Schaftes.

Gemäß der im Anspruch 5 gekennzeichneten Weiterbildung des erfindungsgemäßen Verfahrens werden vor Erzeugung der Vertiefung, also vor der Durchführung eines tiefziehähnlichen Verfahrens, außerhalb des später auszuführenden Trennschnittes zwei radial beabstandete Kreisschnitte ausgeführt, die jeweils auf diametral gegenüberliegenden Stellen unterbrochen sind, wobei die Unterbrechungen des ersten Kreisschnitts zu den Unterbrechungen des zweiten Kreisschnitts um 90° versetzt sind. Durch diese Maßnahme kann sich das später den Flansch des Hohlniets bildende Material des Blechs beim Tiefziehvorgan nach innen ziehen, was den Tiefziehvorgang erleichtert. Außerdem sorgen die Unterbrechungen der Kreisschnitte für eine Lageorientierung der später den Hohlniet bildenden Teile während der Formungs- und Stanzvorgänge, bis schließlich durch den Kreisschnitt der spätere Flansch ausgestanzt und damit der gefertigte Hohlniet freigegeben wird.

Anhand der Zeichnung soll das erfindungsgemäße Verfahren näher erläutert und im Zusammenhang mit dem letzten Verfahrensschritt der erfindungsgemäße Hohlniet beschrieben werden.
- Fig. 1 - 6: zeigen schematisch die verschiedenen Arbeitsschritte bei der Durchführung eines Ausführungsbeispiels des erfindungsgemäßen Verfahrens.

Fig. 1 verdeutlicht schematisch die Ausführung eines Kreisschnitts 2, der an zwei diametral gegenüberliegenden Stellen Unterbrechungen 2 aufweist.

Fig. 2 verdeutlicht den nächsten, in Fig. 2 dargestellten Verfahrensschritt. Dabei wird innerhalb des Kreisschnitts 2 ein zweiter Kreisschnitt 3 ausgeführt, der an zwei diametral gegenüberliegenden Stellen Unterbrechungen 4 aufweist.

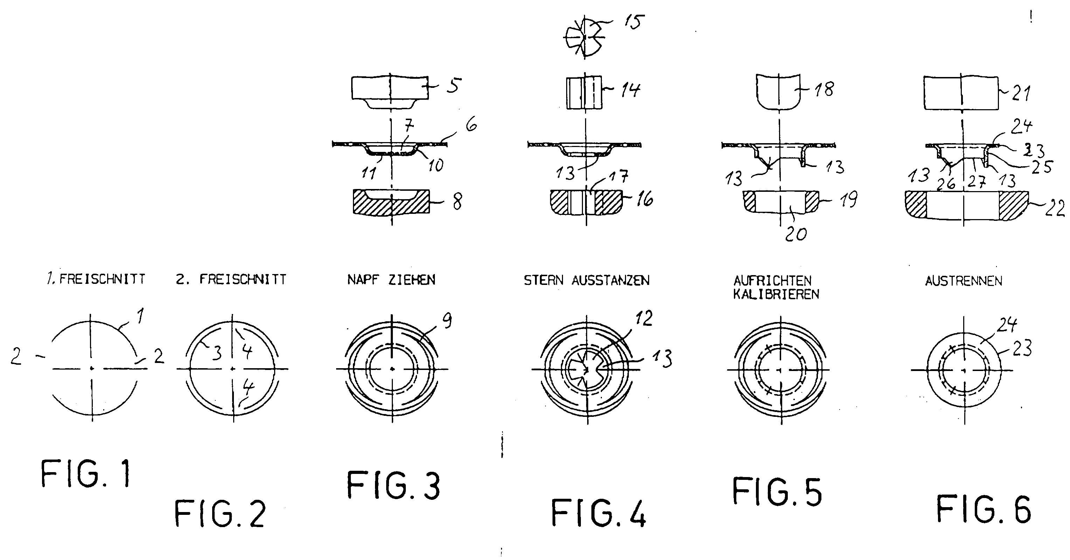

Fig. 3 zeigt in einer Reihe mit den Figuren 1 und 2 den dritten Verfahrensschritt, wobei im oberen Teil der Fig. 3 im Schnitt dargestellt ist, daß mittels eines Stempels 5 in einem Blech 6 eine im Querschnitt im wesentlichen U-förmige Vertiefung 7 erzeugt wird, indem der Stempel 5 unter Zwischenlage des Bleches 6 gegen eine Unterform 8 gepreßt wird. Dabei zieht sich das Material des Bleches 6 teilweise radial nach innen zu der Vertiefung 7 hin, wie das aus dem unteren Teil der Fig. 3 durch die Verformung von zwischen den Kreisschnitten 1 und 3 gebildeten Stegen 9 ersichtlich ist. Seitenwände 10 der Vertiefung 7 sollen später den Schaft des Hohlniets bilden. Ein Boden 11 der Vertiefung 7 dient im nächsten Verfahrensschritt zur Herstellung von Vorsprüngen für späteres Buckelschweißen.

Fig. 4 verdeutlicht den nächsten Verfahrensschritt, bei dem aus dem Boden 11 ein sternförmiges Teil 12 herausgestanzt wird, das so geformt ist, daß von dem Boden 11 spitze, sich von der Seitenwand 10 radial nach innen erstreckende Vorsprünge 13 verbleiben.

In Fig. 4 oben ist der Stanzvorgang verdeutlicht. Ein Stanzstempel 14, dessen Querschnittsform 15 oberhalb davon dargestellt ist, wird gegen den Boden 11 bewegt, der gegen eine Unterform 16 mit einer Ausnehmung 17 bewegt wird, deren Querschnittsform komplementär zu der Querschnittsform 15 des Stanzstempels 14 ausgebildet ist.

Fig. 5 verdeutlicht den nachfolgenden Verfahrensschritt. Es wird ein Stempel 18 in das Innere der napfförmigen Vertiefung 7 gefahren, wobei die Gegenkraft durch eine Unterform 19 aufgenommen wird. Durch diesen Verfahrensschritt werden die Vorsprünge 13 in Axialrichtung gebogen, wobei sie sich glatt an eine Innenwandung 20 der Unterform 19 anlegen.

In dem in Fig. 6 verdeutlichten Verfahrensschritt wird ein Stanzstempel 21 gegen eine Unterform 22 gefahren und so ein kreisförmiger Trennschnitt 23 ausgeführt, so daß ein Flansch 24 gebildet und gleichzeitig der fertige Hohlniet von dem Blech 6 abgetrennt wird.

In Fig. 6 oben ist die fertige Form des erfindungsgemäßen Hohlniets zu erkennen. Von dem radial sich nach außen erstreckenden Flansch 24 erstreckt sich ein rohrförmiger Schaft 25, von dem aus sich die im wesentlichen dreieckigen Vorsprünge 13 mit scharfen Spitzen 26 in Achsrichtung erstrecken. Die Vorsprünge 13 haben in Umfangsrichtung einen Abstand zueinander, derart, daß zwischen den Vorsprüngen 13 in Umfangsrichtung verlaufende Ränder 27 des Schaftes 25 gebildet sind. Die Länge der Vorsprünge 13 in Achsrichtung des Schaftes 25 ist kleiner als der Radius des Schaftes 25.

## Patentansprüche

1. Hohlniet zur Befestigung an einem Metallbehälter durch Buckelschweißen, mit einem rohrförmigen Schaft (25), der an einem axialen Ende einen Flansch (24) und an seinem anderen axialen Ende in Achsrichtung weisende scharfe Vorsprünge (13) aufweist, **dadurch gekennzeichnet**, daß die Vorsprünge (13) in Umfangsrichtung in Abstand zueinander ungeordnet sind, derart, daß zwischen den Vorsprüngen (13) in Umfangsrichtung verlaufende Ränder (27) des Schaftes (25) gebildet sind, und daß die Länge der Vorsprünge (13) in Achsrichtung des Schaftes (25) kleiner ist als der Radius des Schaftes (25).

2. Hohlniet nach Anspruch 1, **dadurch gekennzeichnet**, daß die Zahl der Vorsprünge (13) drei ist.

3. Hohlniet nach Anspruch 1, **dadurch gekennzeichnet**, daß die Vorsprünge (13) dreieckförmig sind.

4. Verfahren zur Herstellung eines Hohlniets gemäß Anspruch 1, **dadurch gekennzeichnet**, daß in einem Blech (6) eine im Querschnitt im wesentlichen U-förmige Vertiefung (7) erzeugt wird, deren Seitenwand (10) im wesentlichen der Größe des Schaftes (25) des herzustellenden Hohlniets entspricht, daß aus dem Boden (11) der Vertiefung (7) ein sternförmiges Teil (12) ausgestanzt wird, das so geformt ist, daß von dem Boden spitze, sich von der Seitenwand (10) radial nach innen erstreckende Vorsprünge (13) verbleiben, daß die Vorsprünge (13) in Axialrichtung gebogen werden und daß in dem Blech (6) außerhalb und entfernt von der Seitenwand (10) ein vorzugsweise kreisförmiger Trennschnitt (23) ausgeführt wird.

5. Verfahren nach Anspruch 4, **dadurch gekennzeichnet**, daß vor Erzeugung der Vertiefung (7) außerhalb des später auszuführenden Trennschnitts (23) ein erster Kreisschnitt (1) ausgeführt wird, der an zwei diametral gegenüberliegenden Stellen Unterbrechungen (2) aufweist, und daß außerhalb des später auszuführenden Trennschnitts (23) und radial innerhalb oder außerhalb des ersten Kreisschnitts (1) ein zweiter Kreisschnitt (3) ausgeführt wird, der an zwei sich diametral gegenüberliegenden Stellen Unterbrechungen (4) aufweist, und daß die Unterbrechungen (2) des ersten Kreisschnitts (1) zu den Unterbrechungen (4) des zweiten Kreisschnitts (3) um 90° versetzt sind.

## Claims

1. A tubular rivet for attachment to a metal container by means of projection welding, having a tube-shaped shank (25), which has a flange (24) on one axial end and sharp projections (13) on its other axial end in the axial direction, characterised in that the projections (13) are randomly distributed spaced from one another in the circumferential direction, that shank (25) edges (27) are formed between the projections (13) extending in the circumferential direction, and that the length of the projection (13) in the axial direction of the shank (25) is smaller than the radius of the shank (25).

2. A tubular rivet according to claim 1, characterised in that the number of projections (13) is three.

3. A tubular rivet according to claim 1, characterised in that the projections (13) are triangular-shaped.

4. A process for manufacturing a tubular rivet according to claim 1, characterised in that a depression (7) which is essentially U-shaped in cross-section is produced in a sheet (6), whose side wall (10) essentially corresponds to the size of the shank (25) of the to-be-produced tubular rivet, that a star-shaped part (12) is punched out from the base of the depression (7) which is so-shaped that from the base points, projections (13) remain extending radially inwards from the side wall (10), that the projections (13) are bent in the axial direction and that a preferably circular-shaped severance cut (23) is carried out in the sheet (6) outside and spaced from side wall (10).

5. A process according to claim 4, characterised in that before producing the depression (7) outside the later to-be-carried-out severance cut (23), a first circular cut (1) is carried out, which has interruptions (2) on two diametrically opposed places, and that outside the later to-be-carried-out severance cut (23) and radially inside or outside the first circular cut (1), a second circular cut (3) is carried out, which has interruptions (4) on two diametrically opposed places, and that the interruptions (2) of the first circular cut (1) are displaced from the interruptions (4) of the second circular cut (3) by 90°.

## Revendications

1. Rivet tubulaire pour la fixation à un récipient métallique, par soudage à bossages, avec une tige (25) tubulaire qui présente, à une extrémité axiale, une collerette (24) et, à son autre extrémité axiale, des saillies (13) acérées dirigées en direction axiale,
caractérisé en ce que les saillies (13) sont disposées, en direction périphérique, à écartement les unes des autres de telle sorte que des bords (27) de la tige (25) s'étendant en direction périphérique sont formés entre les saillies (13) et que la longueur des saillies (13) en direction axiale de la tige (25) est inférieure au rayon de la tige (25).

2. Rivet tubulaire selon la revendication 1,
caractérisé en ce que le nombre des saillies (13) est de trois.

3. Rivet tubulaire selon la revendication 1,
caractérisé en ce que les saillies (13) sont de forme triangulaire.

4. Procédé pour la fabrication d'un rivet tubulaire selon la revendication 1,
caractérisé en ce qu'on crée, dans une tôle (6), un évidement (7), sensiblement en forme de U en section transversale, dont la paroi latérale (10) correspond sensiblement à la grandeur de la tige (25) du rivet tubulaire à fabriquer, qu'on découpe à la matrice, dans le fond (11) de l'évidement (7), une pièce (12) en forme d'étoile qui est conformée de telle sorte qu'il demeure des saillies (13) pointues s'étendant depuis la paroi latérale (10) radialement vers l'intérieur, qu'on courbe les saillies (13) en direction axiale et qu'on effectue une coupe de séparation (23), de préférence circulaire, dans la tôle (6) en dehors et à éloignement de la paroi latérale (10).

5. Procédé selon la revendication 4,
caractérisé en ce que, avant la création de l'évidement (7), on effectue une première coupe circulaire (1), en dehors de la coupe de séparation (23) à réaliser plus tard, qui présente des interruptions (2) en deux emplacements diamétralement opposés et que, en dehors de la coupe de séparation (23) à réaliser ultérieurement et radialement à l'intérieur ou à l'extérieur de la première coupe circulaire (1), on réalise une seconde coupe circulaire (3) qui présente des interruptions (4) en deux emplacements diamétralement opposés et que les interruptions (2) de la première coupe circulaire (1) et les interruptions (4) de la seconde coupe circulaire (3) sont décalées de 90°.
